Europäisches Patentamt

(19) European Patent Office

Office européen des brevets

(11) Publication number: **0 279 621 B1**

(12) **EUROPEAN PATENT SPECIFICATION**

(45) Date of publication of patent specification :
17.04.91 Bulletin 91/16

(51) Int. Cl.⁵ : **B67C 3/30, B65G 25/04**

(21) Application number : 88301260.1

(22) Date of filing : 16.02.88

(54) **Keg-handling device.**

(30) Priority : 17.02.87 GB 8703635

(43) Date of publication of application :
24.08.88 Bulletin 88/34

(45) Publication of the grant of the patent :
17.04.91 Bulletin 91/16

(84) Designated Contracting States :
AT BE CH DE ES FR GB GR IT LI LU NL SE

(56) References cited :
DE-A- 3 301 188
FR-A- 2 325 601
US-A- 3 831 645

(73) Proprietor : APV ROSISTA LIMITED
Commissioners Road
Strood Rochester Kent ME2 4EJ (GB)

(72) Inventor : Lee, Graham Leslie
35 Belgrave Road
Minster-on-Sea Sheerness Kent ME12 3EB
(GB)

(74) Representative : Rackham, Stephen Neil et al
GILL JENNINGS & EVERY 53-64 Chancery
Lane
London WC2A 1HN (GB)

## Description

The present invention is concerned with devices for handling kegs and in particular devices capable of moving kegs accurately and repeatably to a predetermined position and having the features defined in the first part of claim 1. Previously devices used for this purpose have comprised keg engaging means including means to engage the chime of a keg, and drive means arranged to bring the keg engaging means into engagement with the keg at a pick up position and to drive the keg forwards to a predetermined position. One such device is disclosed in our earlier British patent specification 1,512,395. In this particular device a walking beam conveyor includes two projections spaced apart in a direction orthogonal to the direction of movement of the kegs which engage the back of the chime of a keg and so drive the keg forward. The orientation of the walking beam conveyor is strictly controlled so that at the end of a transfer cycle the projections are accurately located at a predetermined position. The device is therefore able to centre repeatedly kegs of a given radius on a predetermined point. However if kegs of different radii are handled then the final location of the centre of each of the kegs varies according to its radius. In practice therefore it is necessary to readjust the device for each size of keg handled. Such devices which engage the chime in order to locate a keg have the further disadvantage that the damage which tends to occur to the chime during the handling of the keg can, by causing deformation and hence altering the effective radius of the chime, seriously affect the accuracy with which the keg is centered.

According to the present invention such a device is characterised in that the locating device includes a carriage mounted for forwards and backwards movement along a carriageway and in that the keg engaging means comprise a chime engaging finger mounted towards the front of a carriage and a keg neck pusher mounted towards the rear of the carriage, the mounting between carriage and carriageway being arranged to cause the carriage to tilt as it moves along, and the carriageway being movable upwards and downwards so that, in use, with the carriage at the pick-up position the carriageway is raised so that the chime engaging finger engages the inside of the chime of the keg as the carriage moves forwards to pull the keg forwards, further forwards movement of the carriage causing the front of the carriage to tilt downwards so disengaging the chime engaging finger from the chime of the keg and allowing the neck engaging pusher to engage the neck of the keg to push it further forwards until the neck is positioned at the predetermined location.

A device in accordance with the present invention by contrast with known devices is able to locate accurately kegs of a wide range of sizes and is unaffected by denting of the chime. Moreover this is achieved with a simple mechanical system and offers advantages in terms of cost and reliability. In common with conventional devices the keg locating device initially engages the chime since this is most readily accessible when, for example, the keg is supported face down on a conveyor at the pick-up position. However by subsequently engaging the neck of the keg the device ensures that the keg is accurately centered at a predetermined position whatever its radius. The device enables kegs to be picked-up and located in a single continuous movement and so is able to reduce the "dead time" spent by kegs between the pick-up position and the final location.

Preferably the mounting between the carriage and the carriageway is arranged so that the forwards movement of the carriage causes the back of the carriage to tilt upwards so that the neck engaging pusher moves upwards to engage the neck of the keg.

Preferably the carriage includes a first peg positioned towards the front of the carriage and projecting from a side wall of the carriage and a second peg positioned towards the rear of the carriage and projecting from an opposing side wall of the carriage, the pegs being arranged to engage corresponding first and second channels formed in the carriageway, the channels being configured to cause the tilting of the carriage as it moves forwards.

When the predetermined location is the feed-in point for a walking beam conveyor then preferably the device includes a mechanical link connecting the carriage to the walking beam conveyor and arranged to drive the carriage backwards and forwards in step with the walking beam conveyor. Alternatively the device may include a mechanical link connecting the carriage to a pneumatic cylinder and arranged to drive the carriage backwards and forwards independently.

Preferably the angle between the axes of the chime engaging finger and the keg neck pusher is such that when the carriage is positioned to bring the chime engaging finger in engagement with the chime the finger is substantially normal to the base of the keg and when the carriage is positioned to bring the keg neck pusher in engagement with the neck the keg neck pusher is substantially normal to the base of the keg.

A device in accordance with the present invention is now described in detail with reference to the accompanying drawings, in which :

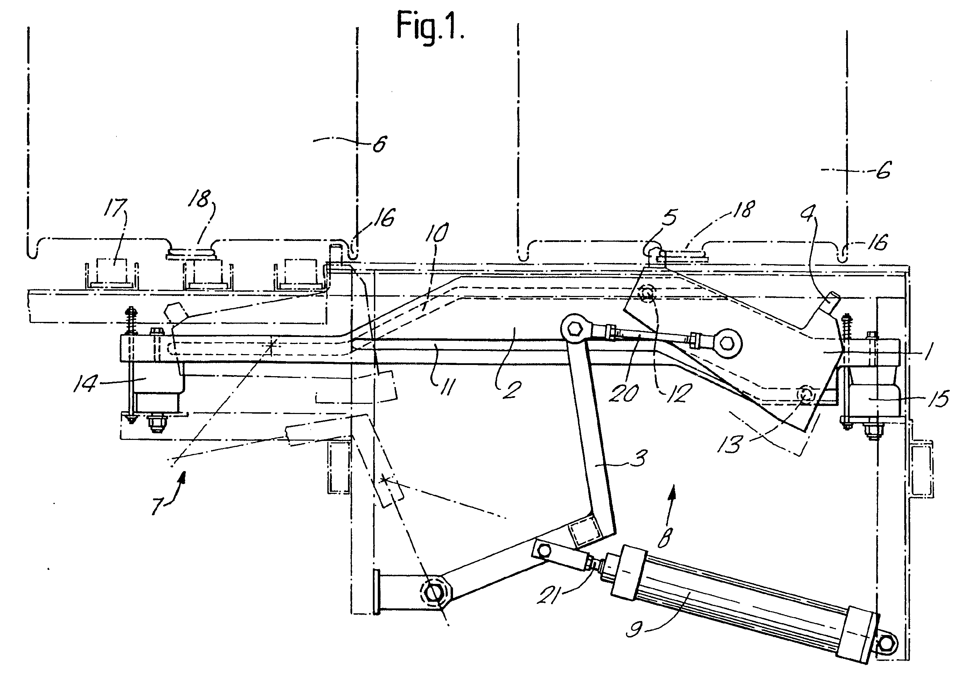

Figure 1 is a side elevation ; and,

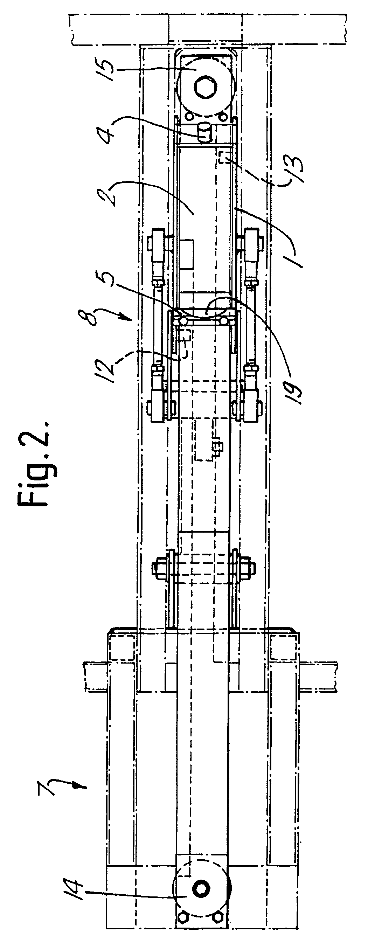

Figure 2 is a plan.

A keg locating device comprises a carriage 1 mounted on a carriageway 2 and pivotally connected to an articulated arm 3. A cylindrical chime engaging finger 4 and a keg neck pusher 5 extends from an upper surface of the carriage towards its front and its rear respectively.

In use the device is fixed below rails supporting kegs 6 with the arm 3 substantially vertical. The rails extend from a pick-up position 7 to a predetermined location 8 at which kegs 6 transferred from the pick-up position 7 are to be centered. A pneumatic cylinder 9 connected to the articulated arm 3 drives the carriage 1 via the arm 3 backwards and forwards between the pick-up position 7 and the predetermined location 8. Channels 10, 11 formed in the carriageway 2 are engaged by pegs 12, 13 extending inwardly from opposing side walls of the carriage 1.

At the start of each operational cycle the pneumatic cylinder 9 is fully extended driving the arm 3 and the carriage 1 to a position immediately below the first station 7. Bellows 14, 15 are operated to raise the carriageway and the carriage to a position (indicated with dashed lines) in which the chime engaging finger 4 engages the chime 16 of a keg supported on a conveyor 17 at the pick-up position 7. The keg neck pusher 5 has less vertical extent than the chime engaging finger 4 and is positioned below the chime engaging finger 4 to avoid fouling the conveyor 17 as the chime engaging finger 4 is raised.

The pneumatic cylinder 9 is then actuated to draw the carriage 1 away from the pick-up position 7. As the carriage 1 moves forward the chime engaging finger 4 pushes against the point of engagement with the inner surface of the chime 16 and so moves the keg 6 forwards. As its moves along the carriageway 2 the attitude of the carriage 1 is determined by the path of the pegs 12, 13 through the channels 10, 11. These channels are configured so that once the rear end of the carriage 1 is clear of the pick-up position 7 the forward end of the carriage 1 is tilted downwards moving the chime engaging finger 4 out of engagement with the chime 16 and bringing the keg neck pusher 5 upwards into engagement with the neck 18 of the keg 6. The keg neck pusher 5 continues to push the keg 6 forward until the arm 3 reaches its forwardmost position. The location of the keg neck pusher 5 at this forwardmost position depends solely on the geometry of the device. The final position of the keg neck 18 in turn depends upon the location of the keg neck pusher 5 and accordingly the operational cycle leaves the keg 6 accurately centered at a predetermined location 8 irrespective of the radius of the keg 6.

In the preferred embodiment the accuracy of the centering of the keg 6 is further improved by forming the keg neck pusher 5 with a concave surface 19. As this concave surface 19 engages the keg neck 18 the forward movement of the keg neck pusher 5 tends to cause the keg 6 to move towards the centre of the concave surface 19 thereby correcting any lateral displacement of the centre of the keg 6. Accurate control of the final position of the keg 6 is further aided by the inclusion of a screw threaded adjustable connecting rod 20 in the articulated arm 3 and a further screw threaded adjustable rod 21 between the pneumatic cylinder 9 and the articulated arm 3, the length of these rods 20, 21 being changed to control the geometry of the device and hence the point at which the kegs 6 are centered.

At the conclusion of an operational cycle the bellows 14, 15 are vented to lower the carriageway prior to its being returned to its initial position under the pick-up position 7 in readiness for a subsequent cycle.

When a device in accordance with the present invention is used to transfer kegs to the feed-in point of a walking beam conveyor then the actuation of the pneumatic cylinder 9 and hence the timing of the operational cycle is synchronised with the operation of the walking beam conveyor. In an alternative embodiment this is achieved by replacing the pneumatic cylinder 9 with an articulated arm pivotally connected to the carriage 1 and linked to the beams of the walking beam conveyor so that the keg locating device is driven by the walking beam conveyor.

## Claims

1. A keg locating device comprising keg engaging means including means to engage the chime of a keg, and drive means arranged to bring the keg engaging means into engagement with the keg at a pick up position and to drive the keg forwards to a predetermined position, characterised in that the locating device includes a carriage (1) mounted for forwards and backwards movement along a carriageway (2) and in that the keg engaging means comprise a chime engaging finger (4) mounted towards the front of a carriage and a keg neck pusher (5) mounted towards the rear of the carriage (1), the mounting between carriage (1) and carriageway (2) being arranged to cause the carriage (1) to tilt as it moves along, and the carriageway (2) being movable upwards and downwards so that, in use, with the carriage (1) at the pick-up position the carriageway (2) is raised so that the chime engaging finger (4) engages the inside of the chime of the keg as the carriage (1) moves forwards to pull the keg forwards, further forwards movement of the carriage (1) causing the front of the carriage (1) to tilt downwards so disengaging the chime engaging finger (4) from the chime of the keg and allowing the neck engaging pusher (5) to engage the neck of the keg to push it further forwards until the neck is positioned at the predetermined location.

2. A device according to claim 1, in which the mounting between the carriage (1) and the carriageway (2) is arranged so that the forwards movement of the carriage (1) causes the back of the carriage (1) to tilt upwards so that the neck engaging pusher (5) moves upwards to engage the neck of the keg.

3. A device according to claim 1 or 2, in which the carriage (1) includes a first peg (13) positioned towards the front of the carriage (1) and projecting from a side wall of the carriage (1) and a second peg (12) positioned towards the rear of the carriage (1) and projecting from an opposing side wall of the carriage (1), the pegs (12, 13) being arranged to engage corresponding first and second channels formed in the carriageway (2), the channels being configured to cause the tilting of the carriage (1) as it moves forwards.

4. A device according to any one of the preceeding claims, in which the predetermined location is the feed-in point for a walking beam conveyor include a mechanical link connecting the carriage (1) to the walking beam conveyor and arranged to drive the carriage (1) backwards and forwards in step with the walking beam conveyor.

5. A device according to any one of claims 1 to 3, in which the drive include a mechanical link (3) connecting the carriage (1) to a pneumatic cylinder (9) and arranged to drive the carriage (1) backwards and forwards.

6. A device according to any one of the preceeding claims, in which the angle between the axes of the chime engaging finger (4) and the keg neck pusher (5) is such that when the carriage is positioned to bring the chime engaging finger (4) in engagement with the chime the finger (4) is substantially normal to the base of the keg and when the carriage is positioned to bring the keg neck pusher (5) in engagement with the neck the keg neck pusher (5) is substantially normal to the base of the keg.

## Ansprüche

1. Vorrichtung zur Anordnung von Fässern mit Faßangriffsmitteln, einschließlich Mitteln, die an der Kimme eines Fasses angreifen, und Antriebsmitteln, die so ausgebildet sind, daß sie die Faßangriffsmittel an einer Aufnahmestelle in Eingriff mit dem Faß bringen und das Faß vorwärts zu einer vorbestimmten Stelle treiben, dadurch gekennzeichnet, daß die Anordnungsvorrichtung einen Wagen (1) aufweist, der entlang einer Wagenbahn (2) vorwärts und rückwärts bewegbar ist, und daß die Faßangriffsmittel einen gegen die Vorderseite eines Wagens hin montierten Kimmenangriffsfinger (4), und einen gegen die Hinterseite des Wagens hin montierten Faßhalsschieber (5) aufweisen, wobei die Lagerung zwischen Wagen (1) und Wagenbahn (2) so getroffen ist, daß der Wagen (1) gekippt wird, während er sich die Bahn entlang bewegt, und die Wagenbahn (2) nach oben und unten bewegbar ist, so daß im Gebrauch bei an der Aufnahmestelle befindlichem Wagen (1) die Wagenbahn (2) angehoben ist, damit der Kimmenangriffsfinger (4) an der Innenseite der Kimme des Fasses angreift, wenn der Wagen (1) sich vorwärts bewegt, um das Faß vorwärts zu ziehen, wobei eine weitere Vorwärtsbewegung des Wagens (1) bewirkt, daß der Vorderteil des Wagens nach unten gekippt wird, um den Kimmenangriffsfinger (4) von der Kimme des Fasses zu lösen und dem Halsangriffsschieber (5) zu gestatten, am Hals des Fasses anzugreifen, um es weiter vorwärts zu schieben, bis der Hals an der vorbestimmten Stelle positioniert ist.

2. Vorrichtung nach Anspruch 1, bei welcher die Lagerung zwischen dem Wagen (1) und der Wagenbahn (2) so getroffen ist, daß bei der Vorwärtsbewegung des Wagens (1) der Hinterteil des Wagens (1) nach oben kippt, so daß der Halsangriffschieber (5) sich nach oben bewegt, um am Hals des Fasses anzugreifen.

3. Vorrichtung nach Anspruch 1 oder 2, bei welcher der Wagen (1) einen ersten Stift (13), der gegen die Vorderseite des Wagens (1) positioniert ist und von einer Seitenwand des Wagens (1) absteht, und einen zweiten Stift (12) aufweist, der gegen die Hinterseite des Wagens (1) positioniert ist und von einer gegenüberliegenden Seitenwand des Wagens (1) absteht, wobei die Stifte (12, 13) so angeordnet sind, daß sie in entsprechende erste und zweite Rinnen eingreifen, die in der Wagenbahn (2) ausgebildet sind, wobei die Rinnen so geformt sind, daß sie ein Kippen des Wagens (1) bei dessen Vorwärtsbewegung bewirken.

4. Vorrichtung nach einem der vorhergehenden Ansprüche, bei welcher die vorbestimmte Stelle der Einspeisepunkt für einen Schrittbalkenförderer ist und eine mechanische Gelenkverbindung vorgesehen ist, welche den Wagen (1) mit dem Schrittbalkenförderer verbindet und so ausgebildet ist, daß sie den Wagen (1) im Schritt mit dem Schrittbalkenförderer rückwärts und vorwärts treibt.

5. Vorrichtung nach einem der Ansprüche 1 bis 3, bei welcher der Antrieb eine mechanische Verbindung (3) aufweist, welche den Wagen (1) mit einem Pneumatikzylinder (9) verbindet und so ausgebildet ist, daß sie den Wagen (1) rückwärts und vorwärts treibt.

6. Vorrichtung nach einem der vorhergehenden Ansprüche, bei welcher der Winkel zwischen den Achsen des Kimmenangriffsfingers (4) und des Faßhalsschiebers (5) so gewählt ist, daß in jener Stellung des Wagens, in welcher der Kimmenangriffsfinger (4) mit der Kimme in Eingriff gebracht wird, der Finger (4) im wesentlichen normal zur Basis des Fasses steht, und in jener Stellung des Wagens, in welcher der Faßhalsschieber mit dem Hals des Fasses in Eingriff gebracht wird, der Faßhalsschieber (5) im wesentlichen normal zur Basis des Fasses steht.

## Revendications

1. Dispositif de mise en place de tonneau comprenant des moyens de prise de tonneau qui comportent des moyens destinés à prendre le jable d'un tonneau, et des moyens d'entraînement agencés pour amener les moyens de prise de tonneau en prise avec le tonneau en une position d'enlèvement et entraîner le tonneau vers l'avant jusqu'à une position prédéterminée, caractérisé en ce que le dispositif de mise en place comprend un chariot (1) monté de façon à se déplacer vers l'avant et vers l'arrière le long d'un chemin (2), et en ce que les moyens de prise de tonneau comprennent un doigt (4) de prise de jable monté vers l'avant d'un chariot et un poussoir (5) de col de tonneau monté vers l'arrière du chariot (1), le montage entre le chariot (1) et le chemin (2) étant agencé de façon à amener le chariot (1) à s'incliner lorsqu'il le parcourt, et le chariot (2) étant mobile vers le haut et vers le bas afin que, lors de l'utilisation, le chariot (1) étant dans la position d'enlèvement, le chemin (2) soit élevé pour que le doigt (4) de prise de jable prenne l'intérieur du jable du tonneau pendant que le chariot (1) se déplace vers l'avant pour tirer le tonneau vers l'avant, la poursuite du mouvement vers l'avant du chariot (1) amenant l'avant du chariot (1) à s'incliner vers le bas pour dégager le doigt (4) de prise de jable du jable du tonneau et permettre au poussoir (5) de prise de col de prendre le col du tonneau pour le pousser davantage vers l'avant jusqu'à ce que le col soit positionné dans l'emplacement prédéterminé.

2. Dispositif selon la revendication 1, dans lequel le montage entre le chariot (1) et le chemin (2) est agencé de manière que le mouvement vers l'avant du chariot (1) amène l'arrière du chariot (1) à s'incliner vers le haut afin que le poussoir (5) de prise de col s'élève pour prendre le col du tonneau.

3. Dispositif selon la revendication 1 ou 2, dans lequel le chariot (1) comprend un premier ergot (13) placé vers l'avant du chariot (1) et faisant saillie d'une paroi latérale du chariot (1), et un second ergot (12) placé vers l'arrière du chariot (1) et faisant saillie d'une paroi latérale opposée du chariot (1), les ergots (12, 13) étant agencés de façon à s'engager dans des première et seconde rainures correspondantes formées dans le chemin (2), les rainures étant configurées de façon à provoquer l'inclinaison du chariot (1) pendant qu'il se déplace vers l'avant.

4. Dispositif selon l'une quelconque des revendications précédentes, dans lequel l'emplacement prédéterminé est le point de chargement d'un transporteur à longerons mobiles, un élément de liaison mécanique reliant le chariot (1) au transporteur à longerons mobiles et étant agencé de façon à entraîner le chariot (1) vers l'arrière et vers l'avant en cadence avec le transporteur à longerons mobiles.

5. Dispositif selon l'une quelconque des revendications 1 à 3, dans lequel l'entraînement comprend un élément mécanique (3) de liaison reliant le chariot (1) à un cylindre pneumatique (9) et agencé pour entraîner le chariot (1) vers l'arrière et vers l'avant.

6. Dispositif selon l'une quelconque des revendications précédentes, dans lequel l'angle entre les axes du doigt (4) de prise de jable et du poussoir (5) de col de tonneau est tel que, lorsque le chariot est positionné pour amener le doigt (4) de prise de jable en prise avec le jable, le doigt (4) soit sensiblement normal à la base du tonneau et, lorsque le chariot est positionné pour amener le poussoir (5) de col de tonneau en prise avec le col, le poussoir (5) de col de tonneau soit sensiblement normal à la base du tonneau.

# Fig.1.

EP 0 279 621 B1

Fig.2.